# EUROPEAN PATENT APPLICATION

(11) **EP 1 722 194 A2**
(43) Date of publication of application: **15.11.2006**
(21) Application number: 06252103.4
(22) Date of filing: 18.04.2006
(51) Int. Cl.: G01C 19/72

(54) **Apparatus comprising a waveguide with reduced higher modes**

(30) Priority: 11.05.2005 US 126791
(71) Applicant: Northrop Grumman Corporation, Los Angeles, CA 90067-2199 (US)
(72) Inventor: Moore, Gregory S., Saugus, CA 91390 (US); Rahn, John, West Hills, CA 91307 (US)
(74) Representative: Mackenzie, Andrew Bryan

(57) **Abstract**

An apparatus in one example has an integrated optic component having at least a higher order mode energy and a lower order mode energy. The integrated optic component also has a portion with a predetermined configuration such that radiation divergence losses of the higher order mode energy being much larger than radiation divergence losses of the lower order mode energy.

## Description

### TECHNICAL FIELD

The invention relates generally to waveguides and more particularly to fiber optic sensors.

### BACKGROUND

One type of optic-fiber gyroscope utilizes the Sagnac effect. In such gyroscopes, light from a single light source, normally by means of a directional coupler, is fed into the two ends of a fiber coil from a fiber-optic light guide so that the light passes through the light guide clockwise and counterclockwise. The light fractions emerging from the ends of the fiber coil interfere with one another in the coupling area of the directional coupler, whereby phase differences are transformed into amplitude differences. The resulting interference signal is received by means of a receiver arrangement. The output signals of the receivers are dependent on the Sagnac phase, which, in turn, is directly proportional to the rate of rotation of the fiber-optic gyroscope so that the rate of rotation of the fiber-optic gyroscope can be determined directly from the output signals of the receivers.

In fiber optic sensors such as the fiber optic gyro (FOG), it is customary to use a relatively short integrated optic component (IOC) to provide several functions. One such function is to split the outgoing light into left and right waveguide branches, which are attached to the clockwise (CW) and counter-clockwise (CCW) leads of a fiber optic coil. Another function is polarization mode selection, which is needed since there are two allowed polarization modes of greatly different speeds of propagation and the best sensing accuracy is obtained if only one of these is selected. Yet another function is electrically controlled optical phase shifting which contributes to signal processing.

The IOC is thus a short element in series between the source/detector and the fiber sensor. For the FOG, the shape of its circuit is a Y where there is a single fiber lead (pigtail) attachment at the base of the Y and a pigtail at left and right branch of the Y. These pigtails, if the fiber is not correctly centered on the IOC waveguide, result in generation of higher order modes. The higher order modes generated at the Y base pigtail will, at the Y junction, result in splitting ratios that are far from the desired 50:50 ratio, and more importantly, result in a phase difference between the light in the left and right branches of the Y. Since the effect of a FOG rotation rate is also just a phase shift between the left and right branch modes, the phase shift introduced by the higher mode can result in a significant false FOG rotation rate or bias.

Optical fiber is also capable of retaining, for short distances, some higher order mode energy that is produced at transitions between segments. However, since the length of the fiber segments used in sensors is usually of the order of meters rather than the millimeter lengths of the IOC, the fiber has plenty of length over which the higher order modes can be extinguished. Other than its short length, another problem with the usual IOC is that the optical absorption loss in the immediate vicinity of the waveguide (where the lowest mode resides) is no lower than the optical loss in the regions away from the waveguide where the much larger cross-section higher order mode resides. Therefore, there is little absorption contrast that can be used to disfavor the propagation of the higher order mode and favor the propagation of the lowest mode.

Thus, a need exists for an improved waveguide architecture that reduces higher mode content.

### SUMMARY

The invention in one implementation encompasses an apparatus. The apparatus comprises an integrated optic component having at least a higher order mode energy and a lower order mode energy; and the integrated optic component having a portion with a predetermined configuration such that radiation divergence losses of the higher order mode energy being much larger than radiation divergence losses of the lower order mode energy.

Another implementation of the invention encompasses a method. The method comprises conducting an optical signal through a predetermined configuration in an integrated optic component; splitting an optical signal in the integrated optic component having at least a higher mode and a lower mode; and making radiation divergence losses of the higher mode much larger than those of the lower mode.

A further implementation of the invention encompasses a system. The system comprises a fiber optic gyroscope having an integrated optic component with at least a higher mode and a lower mode; and the integrated optic component having a portion with a predetermined configuration that reduces the higher mode relative to the lower mode.

### DESCRIPTION OF THE DRAWINGS

Features of exemplary implementations of the invention will become apparent from the description, the claims, and the accompanying drawings in which:

FIG. 1 is a representation of one implementation of an apparatus that comprises a fiber optic gyroscope.

FIG. 2 depicts a known IOC.

FIG. 3 shows the mode power overlap integrals in a typical FOG IOC of the lowest mode for the FIG. 2 IOC.

FIG. 4 shows phase difference relative to that of a reference wave's phase in a typical FOG IOC of the lowest mode for the FIG. 2 IOC.

FIG. 5 depicts one exemplary IOC according to the present apparatus and method.

FIG. 6 shows the mode power overlap integrals in a typical FOG IOC of the lowest mode for the FIG. 5 IOC.

FIG. 7 shows the mode phases in a typical FOG IOC of the lowest mode for the FIG. 5 IOC.

FIG. 8 is a flow diagram depicting the present method.

### DETAILED DESCRIPTION

A fiber-optic gyro contains a coil with a long (up to 5km) wound optical fiber. Two light beams travel along the fiber in opposite directions. An optical system with a beam splitter directs the beams on a photodetector. During operation of the fiber-optic gyro, cw-ccw (clockwise - counter-clockwise) mode interference (depending on rotation-induced phase shift) causes optical power change at the photodetector.

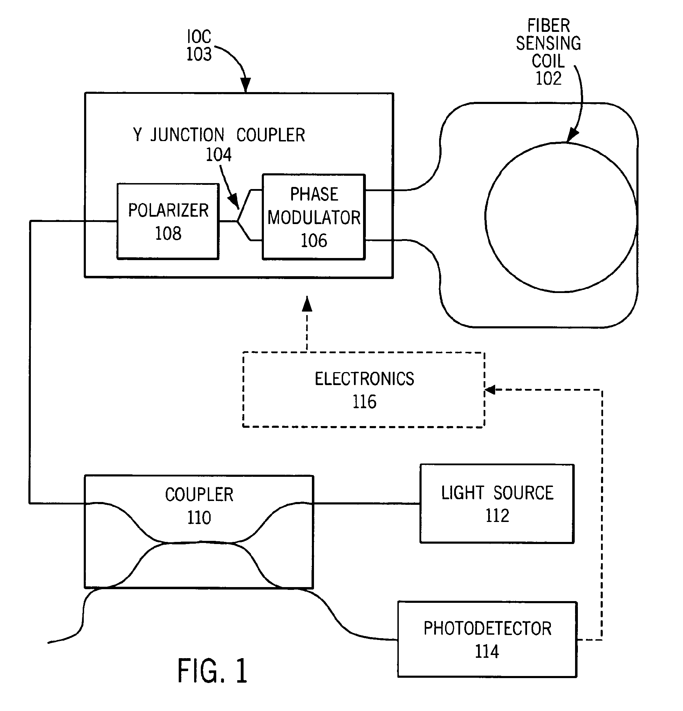

Turning to FIG. 1, an apparatus in one example comprises a fiber sensing coil 102 that is operatively coupled to an IOC 103. The IOC 103 has a phase modulator 106 operatively coupled to the fiber sensing coil 102, a Y-junction coupler 104 operatively coupled to the phase modulator 106, and a polarizer 108 operatively coupled to the Y-junction coupler 104. A coupler 110 couples, as shown in FIG. 1, the IOC 103 to a light source 112 and a photodetector 114. The photodetector 114 is also operatively coupled to electronics 116, which controls the IOC 103.

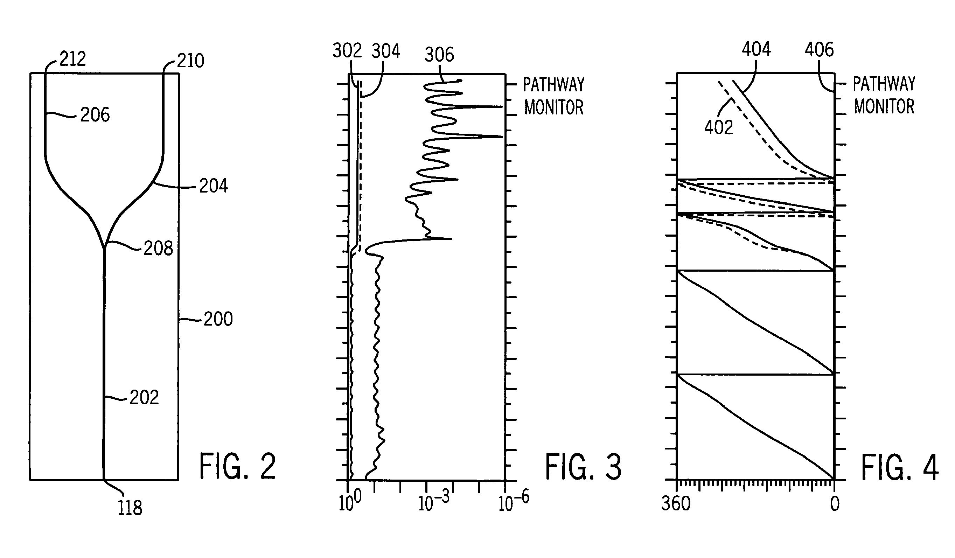

FIG. 2 depicts an example of a typical IOC 200. An input section 202 may couple an input port 118 to a junction 208. Left and right output branches 206, 204 may couple the junction 208 to output ports 212, 210, respectively.

Other than its short length, another problem with the usual IOC is that the optical absorption loss in the immediate vicinity of the waveguide (where the lowest mode resides) is no less than the absorption loss where the higher order mode resides. Therefore, there is little absorption contrast that can be used to disfavor the propagation of the higher order mode and favor the propagation of the lowest mode. Since absorption contrast between these modes is small, the radiation divergence losses of the higher mode need to be much larger than those of the lower mode (i.e. conservation of energy dictates that the optical energy has to go somewhere). This is the strategy of the present apparatus and method.

There is a quantity that defines a fundamental difference between the lowest mode and the higher mode. This is the effective index of refraction of the mode. For the lowest mode, the effective index of refraction is substantially higher than the substrate index. Typical values are a substrate index of 2.14 and a lowest mode effective index of 2.143 where the difference (excess) between the mode effective index and the substrate index of 0.003 needs to be at least this value in order to provide robust guidance of the mode through the IOC which is not composed strictly of simple straight waveguides. For the same waveguide the next higher mode will have an effective index like 2.1401 where the excess effective index is only 0.0001. This higher mode will be much larger in cross section than the lowest mode, but it will usually propagate without loss in a uniform straight waveguide. However, its guidance is not robust and this is exploited for the present apparatus and method.

FIG. 3 shows the mode power overlap integrals in a typical FOG IOC (such as IOC 200 in FIG. 2) of the lowest mode (TE00) when the input optical fiber has been displaced by 2 microns thereby generating a TE10 mode 306 of approximately -10 dB lower power than the TE00 modes 302, 304. It shows that the TE00 mode powers 302, 304 in the left and right branches 206, 204 (see FIG. 2) are quite different, approximately in the ratio 60:40 instead of the desired 50:50 ratio.

FIG. 4 shows the phase difference relative to that of a reference wave's phase in a typical FOG IOC (such as IOC 200 in FIG. 2) of the lowest mode (TE00) when the input optical fiber has been displaced by 2 µm thereby generating a TE10 mode approximately -10 dB lower power than the TE00 modes 402, 404. It shows that the TE00 mode phases 402, 404 in the left and right branches 206, 204 (see FIG. 2) are quite different. This difference is an approximately 30 degrees difference, which would, if were not subsequently nearly canceled in the recombining process, constitute a very large bias error in the FOG.

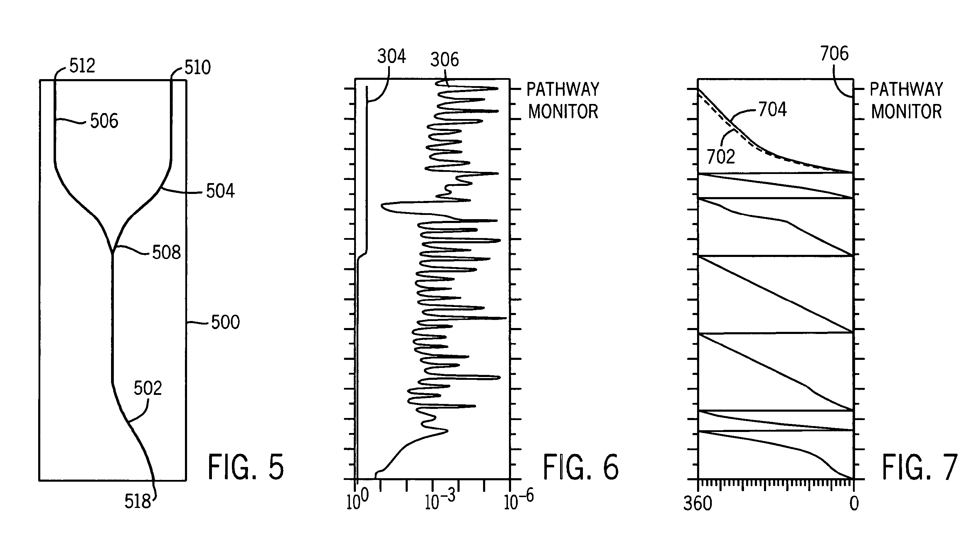

FIG. 5 depicts an example of an embodiment of an IOC 500 according to the present apparatus and method. An input section 502 has a predetermined configuration (such as an S-shape) and may couple an input port 518 to a junction 508. Left and right output branches 506, 504 may couple the junction 508 to output ports 512, 510, respectively.

FIG. 6 has the same plots of field and power as in FIG. 3, but in FIG. 6 an S turn 502 (see FIG. 5) has been added to help reduce the TE10 mode 606. It shows that the TE00 mode powers 602, 604 in the left and right branches 512, 510 are now substantially the same, approximately in the ratio 50:50. Note that the prior S turn has almost no effect on the more robustly guided TE00 mode power.

FIG. 7 has the same plots of field and phase as in FIG. 5, but in FIG. 7 an S turn 502 (see FIG. 5) has been added to help reduce the TE10 mode 706. It shows that the TE00 mode phases 702, 704 in the left and right branches 512, 510 are now substantially the same.

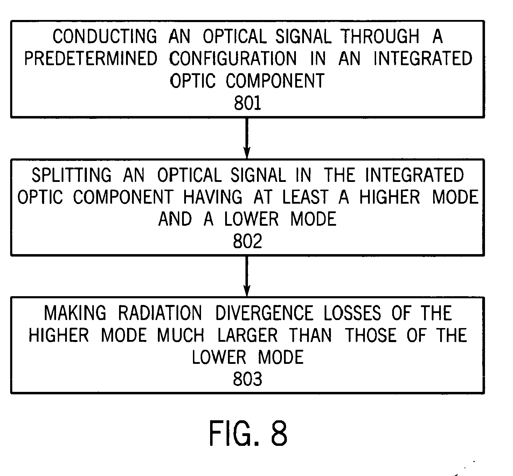

FIG. 8 is a flow diagram depicting an example of the present method. This example of the present method may have the steps of: conducting an optical signal through a predetermined configuration in an integrated optic component (801); splitting an optical signal in the integrated optic component having at least a higher mode and a lower mode (802); and making radiation divergence losses of the higher mode much larger than those of the lower mode (803).

The steps or operations described herein are just exemplary. There may be many variations to these steps or operations without departing from the spirit of the invention. For instance, the steps may be performed in a differing order, or steps may be added, deleted, or modified.

Although exemplary implementations of the invention have been depicted and described in detail herein, it will be apparent to those skilled in the relevant art that various modifications, additions, substitutions, and the like can be made without departing from the spirit of the invention and these are therefore considered to be within the scope of the invention as defined in the following claims.

## Claims

1. An apparatus comprising:
an integrated optic component having at least a higher order mode energy and a lower order mode energy; and
the integrated optic component having a portion with a predetermined configuration such that radiation divergence losses of the higher order mode energy being much larger than radiation divergence losses of the lower order mode energy.

2. The apparatus according to claim 1, wherein the predetermined configuration is an S turn.

3. The apparatus according to claim 1, wherein the integrated optic component has at least an input section and left and right output branches, and wherein the predetermined configuration is located in the input section.

4. The apparatus according to claim 3, wherein the predetermined configuration is an S turn.

5. The apparatus according to claim 3, wherein mode powers in the left and right output branches are substantially the same.

6. An apparatus comprising:
an integrated optic component having at least a higher order mode energy and a lower order mode energy; and
the integrated optic component having a portion with a predetermined configuration that reduces the higher order mode energy relative to the lower order mode energy.

7. The apparatus according to claim 6, wherein the predetermined configuration is an S turn.

8. The apparatus according to claim 6, wherein the integrated optic component has at least an input section and left and right output branches, and wherein the predetermined configuration is located in the input section.

9. The apparatus according to claim 8, wherein the predetermined configuration is an S turn.

10. The apparatus according to claim 8, wherein mode powers in the left and right output branches are substantially the same.

11. A system comprising:
a fiber optic gyroscope having an integrated optic component with at least a higher mode and a lower mode; and
the integrated optic component having a portion with a predetermined configuration that reduces the higher mode relative to the lower mode.

12. The system according to claim 11, wherein the predetermined configuration is an S turn.

13. The system according to claim 11, wherein the integrated optic component has at least an input section and left and right output branches, and wherein the predetermined configuration is located in the input section.

14. The system according to claim 13, wherein the predetermined configuration is an S turn.

15. The system according to claim 13, wherein mode powers in the left and right output branches are substantially the same.

16. The system according to claim 11, wherein a junction of the input section and the left and right output branches is located on a longitudinal reference line, wherein the input section has an input port opposed from the junction, and wherein the input port is displaced a predetermined distance from the longitudinal reference line.

17. The system according to claim 16, wherein the predetermined configuration is an S turn.

18. A method comprising:
conducting an optical signal through a predetermined configuration in an integrated optic component;
splitting an optical signal in the integrated optic component having at least a higher mode and a lower mode; and
making radiation divergence losses of the higher mode much larger than those of the lower mode.

19. The method according to claim 18, wherein the predetermined configuration is an S turn.

20. The method according to claim 18, wherein mode powers of the split optical signals are substantially the same.
